# EUROPEAN PATENT APPLICATION

(11) **EP 4 644 080 A1**
(43) Date of publication of application: **05.11.2025**
(21) Application number: 23911779.9
(22) Date of filing: 15.12.2023
(51) Int. Cl.: B29C 33/44, F16J 15/328, F16J 15/3272

(54) **PRODUCTION METHOD FOR RESIN MOLDING, INJECTION MOLDING MOLD, AND RESIN MOLDING**

(30) Priority: 26.12.2022 JP 2022208612
(71) Applicant: NOK Corporation, Minato-ku Tokyo 105-8585 (JP)
(72) Inventor: IKEDA, Atsushi, Kitaibaraki-shi, Ibaraki 319-1535 (JP); ISHIMORI, Junichi, Kitaibaraki-shi, Ibaraki 319-1535 (JP); TANNO, Yuichiro, Kitaibaraki-shi, Ibaraki 319-1535 (JP)
(74) Representative: TBK
(86) International application number: PCT/JP2023/045050
(87) International publication number: WO 2024/142998

(57) **Abstract**

An arc-shaped resin molded object with a first end part and a second end part is manufactured. The resin molded object has a first surface and a second surface opposing each other along an axis, and an inner circumferential surface and an outer circumferential surface between the first surface and the second surface. In a forming process, a resin material is supplied to an interior space of an injection mold to form an intermediate molded object. Where, the injection mold includes: an inner mold with an inner circumference molding surface used to form the inner circumferential surface; and an outer mold with an outer circumference molding surface used to form the outer circumferential surface. The intermediate molded object includes: the resin molded object; and one or more protrusions connected to the inner circumferential surface of the resin molded object. In a removing process, the inner mold is removed. In a demolding process, the intermediate molded object is demolded from the outer mold by moving the one or more protrusions.

## Description

### TECHNICAL FIELD

The present invention relates to resin molded objects, such as seal rings or backup rings.

### BACKGROUND ART

A resin molded object, such as a seal ring, is used to seal gaps between opposing members. For example, Patent Document 1 discloses a seal ring with an abutment formed at a single circumferential location.

### Related Art Document

### Patent Document

Patent Document 1: Japanese Patent Application Laid-Open Publication No. 2017-133571

### SUMMARY OF THE INVENTION

### Problem to be Solved by the Invention

It is important to ensure that a resin-molded object can be demolded from a mold without deformation of the molded object under force. However, ensuring ease of demoldability of a resin molded object can impose restrictions on positioning of division faces (parting lines) of sections of the mold. Such restrictions can result in occurrence of linear flashes corresponding to the division faces of the mold in regions of the resin molded object that compromise sealing properties of the resin molded object. To ensure the sealing properties of the molded object, it is necessary to remove such flashes by an operation, such as polishing. However, such an operation incurs an increase in manufacturing costs.

In view of the above circumstances, an object of one aspect of the present disclosure is to facilitate demolding of a resin molded object.

### Means of Solving the Problems

A method for manufacturing a resin molded object according to one aspect of this disclosure is a method for manufacturing an arc-shaped resin molded object with a first end part and a second end part, in which the resin molded object has a first surface and a second surface opposite each other along an axis, and an inner circumferential surface and an outer circumferential surface between the first surface and the second surface. The method includes: forming an intermediate molded object including: the resin molded object; and one or more protrusions connected to the inner circumferential surface of the resin molded object, by supplying a resin material to an interior space of an injection mold including: an inner mold with an inner circumference molding surface used to form the inner circumferential surface; and an outer mold with an outer circumference molding surface used to form the outer circumferential surface; removing the inner mold; and demolding the intermediate molded object from the outer mold by moving the one or more protrusions.

An injection mold according to one aspect of this disclosure is an injection mold used for manufacture of an arc-shaped resin molded object with a first end part and a second end part, in which the resin molded object has a first surface and a second surface opposite each other, and an inner circumferential surface and an outer circumferential surface between the first surface and the second surface. The injection mold includes: an inner mold that has an inner circumference molding surface forming the inner circumferential surface; and an outer mold that has an outer circumference molding surface forming the outer circumferential surface. A circumferential molding groove is formed on an inner circumferential surface of the outer mold. The molding groove has: a first side surface that forms a first outer region of the first surface, the outer circumference molding surface serving as a bottom surface; and a second side surface that forms a second outer region of the second surface. The inner mold includes: a first molding surface that forms a first inner region of the first surface inside the first outer region; and a second molding surface that forms a second inner region of the second surface inside the second outer region.

A resin molded object according to one aspect of this disclosure is an arc-shaped resin molded object including: a first surface and a second surface opposite each other along an axis; an inner circumferential surface and an outer circumferential surface between the first surface and the second surface; a first end part; a second end part; a straight first protrusion formed circumferentially between a first outer region and a first inner region inside the first outer region of the first surface; and a straight second protrusion formed circumferentially between a second outer region and a second inner region inside the second outer region of the second surface.

### BRIEF DESCRIPTION OF THE DRAWINGS

FIG. 1 is a sectional view of a sealing structure according to a first embodiment.
FIG. 2 is a plan view of a seal ring.
FIG. 3 is a sectional view taken along line III-III shown in FIG. 2.
FIG. 4 is a plan view of an intermediate molded object.
FIG. 5 is a sectional view taken along line V-V shown in FIG. 4.
FIG. 6 is a sectional view of an injection mold.
FIG. 7 is an enlarged view of a region VII shown in FIG. 6.
FIG. 8 is a plan view of a first mold.
FIG. 9 is a plan view of a second mold.
FIG. 10 is a plan view of an interior space of an injection mold.
FIG. 11 is a sectional view of an outer mold.
FIG. 12 is an enlarged view of a region XII shown in FIG. 11.
FIG. 13 is a flowchart of manufacturing the seal ring.
FIG. 14 is an explanatory diagram of a mold opening process and demolding process.
FIG. 15 is a schematic diagram of an injection mold according to a comparative example.
FIG. 16 is an explanatory diagram of problems in the comparative example.
FIG. 17 is a plan view of an interior space of an injection mold according to a second embodiment.
FIG. 18 is an explanatory diagram of mold opening process and demolding process according to a second embodiment.
FIG. 19 is a plan view of an interior space of an injection mold according to a third embodiment.
FIG. 20 is an explanatory diagram of mold opening process and demolding process according to the third embodiment.
FIG. 21 is a sectional view of a sealing structure according to a modification.
FIG. 22 is a sectional view of a sealing structure according to the modification.

### MODES FOR CARRYING OUT THE INVENTION

### A: First Embodiment

### A-1: Sealing Structure 100

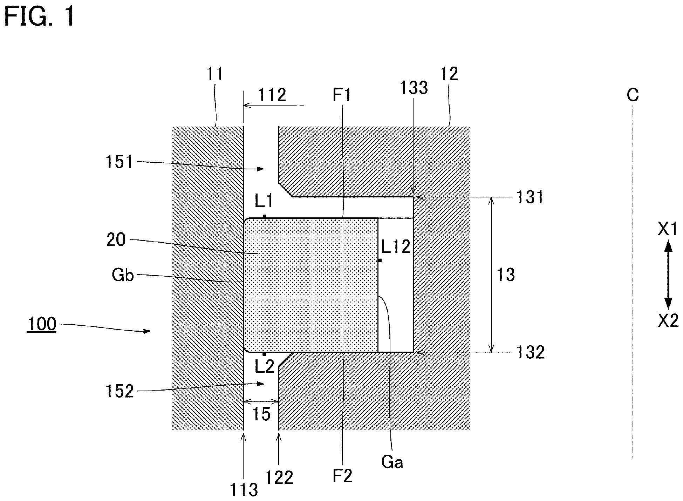

FIG. 1 is a sectional view showing an example of a configuration of a sealing structure 100 according to a first embodiment. The sealing structure 100 is a mechanism for use in a transmission, such as an automatic transmission (AT) or a continuously variable transmission (CVT). As shown in FIG. 1, the sealing structure 100 includes a housing 11, a shaft 12, and a seal ring 20.

The housing 11 is provided with a shaft opening 112 that is circular in cross section. The shaft 12 is a columnar structure that is inserted into the shaft opening 112. An annular gap 15 is formed between an inner circumferential surface 113 of the shaft opening 112 of the housing 11 and an outer circumferential surface 122 of the shaft 12. The seal ring 20 is an annular resin molded object that seals the gap 15. The gap 15 is partitioned into a space 151 and a space 152 across the seal ring 20. The space 151 is kept at a higher pressure relative to the space 152. The space 152 is open to the atmosphere. A fluid, such as oil, is filled in the space 151.

In the description given below, a central axis C of the seal ring 20 is assumed. One direction along the central axis C is denoted as an X1 direction, and a direction opposite to the X1 direction is denoted as an X2 direction. The space 152 is positioned in the X2 direction relative to the space 151. In the following, the X1 and X2 directions are collectively referred to as "axis X." The central axis C is referred to as the central axis of the shaft opening 112 of the housing 11, or the central axis of the shaft 12. The shaft 12 is rotatable about the central axis C.

In this description, "circumferential direction" refers to a circumferential direction of a virtual circle with a diameter passing through the central axis C, "radial direction" refers to a direction of a radius of the virtual circle, "inward" refers to a direction toward the central axis C in the radial direction, and "outward refers to a direction away from the central axis C.

As shown in FIG. 1, the shaft 12 has a mounting groove 13 formed on the outer circumferential surface 122. The mounting groove 13 is a circumferentially recessed part that extends around the entire circumference of the shaft 12. The mounting groove 13 includes a side surface 131, a side surface 132, and a bottom surface 133. The side surface 131 is provided opposite to and spaced apart from the side surface 132 along the axis X. The side surface 131 is positioned in the X1 direction relative to the side surface 132. The bottom surface 133 is an arc-shaped surface that connects the side surface 131 and the side surface 132 to each other. The seal ring 20 of the first embodiment is housed in the mounting groove 13.

### A-2: Seal Ring 20

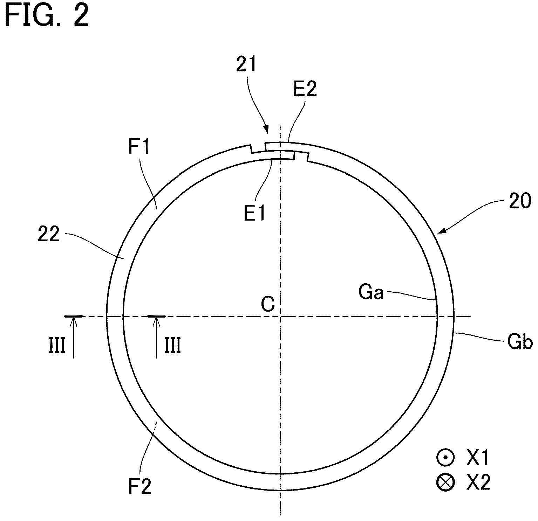

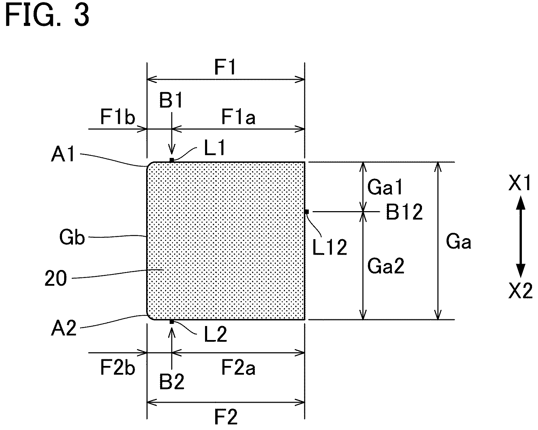

FIG. 2 is a plan view of the seal ring 20. FIG. 3 is a sectional view taken along line III-III shown in FIG. 2. As shown in FIG. 2, the seal ring 20 of the first embodiment is a solid seal ring that includes an abutment part 21 and a main part 22.

Specifically, the seal ring 20 is an arc-shaped structure that includes a first end part E1 and a second end part E2. The first end part E1 and the second end part E2 overlap circumferentially. The first end part E1 and the second end part E2 constitute the abutment part 21 at a single circumferential location. Thus, the seal ring 20 of the first embodiment is an arc-shaped member obtained by cutting a circular ring member at a location that corresponds to the abutment part 21. The first end part E1 and the second end part E2 are movable relative to each other circumferentially. The seal ring 20 may be attached to the shaft 12 with the first end part E1 and the second end part E2 spaced apart from each other.

The main part 22 is an arc-shaped portion of the seal ring 20 other than the main abutment part 21. Each of a dimension and a shape of a cross section of the seal ring 20 orthogonal to the circumferential direction are substantially the same over the entire main part 22, other than the end parts (the first end part E1 and the second end part E2).

The seal ring 20 can be made of one of any of various resin materials. The seal ring 20 may be made of a thermoplastic resin, such as Poly Ether Ether Ketone (PEEK), Poly Phenylene Sulfide (PPS), or PolyAmide (PA). The seal ring 20 is formed by injection molding a resin material using an injection mold 200, which will be described in detail later.

As shown in FIG. 3, the seal ring 20 of the first embodiment is substantially rectangular in cross section. Specifically, the seal ring 20 includes a first surface F1, a second surface F2, an inner circumferential surface Ga, and an outer circumferential surface Gb. The first surface F1 and the second surface F2 are positioned opposite to each other and lies along the axis X. Specifically, the first surface F1 is an arc-shaped flat surface with a line normal in the X1 direction. The second surface F2 is an arc-shaped flat surface with a line normal in the X2 direction. The inner circumferential surface Ga and the outer circumferential surface Gb are positioned between the first surface F1 and the second surface F2.

As described above, the pressure in the space 151 is greater than that in the space 152. As a result, the seal ring 20 in the mounting groove 13 is pressed in the X2 direction, as shown in FIG. 1. The first surface F1 faces and is spaced apart from the side surface 131 of the mounting groove 13. The second surface F2 is in close contact with the side surface 132 of the mounting groove 13. The inner circumferential surface Ga faces and is spaced apart from the bottom surface 133 of the mounting groove 13. The entire outer circumferential surface Gb is in close contact with the inner circumferential surface 113 of the housing 11.

As shown in FIG. 3, the first surface F1 includes a first inner region F1a and a first outer region F1b. The first inner region F1a is an arc-shaped region that has a predetermined width and includes the inner circumferential edge of the first surface F1. The first outer region F1b is an arc-shaped region that has a predetermined width and includes the outer circumferential edge of the first surface F1. Accordingly, the first inner region F1a is located inward of the first outer region F1b. In FIG. 3, a boundary B1 is depicted between the first outer region F1b and the first inner region F1a. The boundary B1 corresponds to a parting line (PL) of the injection mold 200 used to mold the seal ring 20.

The second surface F2 includes a second inner region F2a and a second outer region F2b. The second inner region F2a is an arc-shaped region that has a predetermined width including and includes the inner circumferential edge of the second surface F2. The second outer region F2b is an arc-shaped region that has a predetermined width and includes the outer circumferential edge of the second surface F2. Accordingly, the second inner region F2a is located inward of the second outer region F2b. In FIG. 3, a boundary B2 is depicted between the second outer region F2b and the second inner region F2a. The boundary B2 corresponds to a parting line of the injection mold 200. As shown in FIG. 1, a part of the second inner region F2a of the second surface F2 is in close contact with he side surface 132 of the mounting groove 13. The second outer region F2b of the second surface F2 and the boundary B2 are not in contact with the side surface 132.

As shown in FIG. 3, the inner circumferential surface Ga of the seal ring 20 includes a first portion Ga1 and a second portion Ga2. The first portion Ga1 is adjacent to the first surface F1, and the second portion Ga2 is adjacent to the second surface F2. Accordingly, the first portion Ga1 is positioned relative to the second portion Ga2 in the X1 direction. In FIG. 3, a boundary B12 is depicted between the first portion Ga1 and the second portion Ga2. The boundary B12 corresponds to a parting line of the injection mold 200.

As shown in FIG. 3, a rounded corner A1 is located between the first surface F1 and the outer circumferential surface Gb. The rounded corner A1 forms an arc-shaped surface and seamlessly connects the first surface F1 to the outer circumferential surface Gb. The radius of the corner A1 is approximately 0.1 mm (R 0.1). The rounded corner A1 constitutes an intersection between the first surface F1 and the outer circumferential surface Gb. Similarly, a rounded corner A2 is located between the second surface F2 and the outer circumferential surface Gb. The rounded corner A2 forms an arc-shaped surface and seamlessly connects the second surface F2 to the outer circumferential surface Gb. The radius of the corner A2 is approximately 0.1 mm (R 0.1). The rounded corner A2 constitutes an intersection between the second surface F2 and the outer circumferential surface Gb.

### A-3: Intermediate Molded Object 300

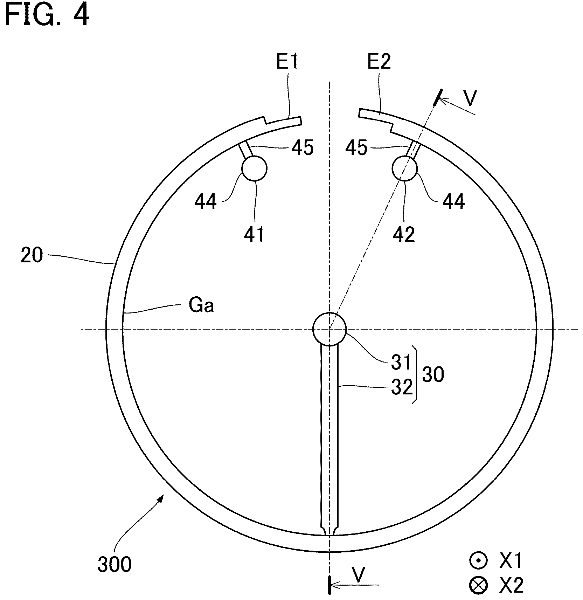

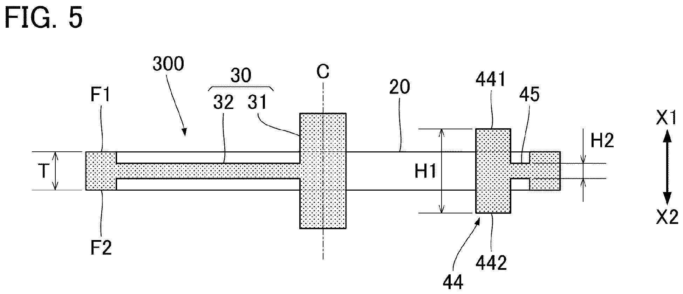

Before explanation of the injection mold 200 is given, description is given of an intermediate molded object (300). The intermediate molded object is molded using the injection mold 200 during manufacture of the seal ring 20. FIG. 4 is a plan view of the intermediate molded object 300. FIG. 5 is a sectional view taken along line V-V shown in FIG. 4. The injection mold 200 is used to mold the intermediate molded object 300.

As shown in FIGS. 4 and 5, the intermediate molded object 300 includes an auxiliary molding part 30, a first tab 41, and a second tab 42 in addition to the seal ring 20 for final manufacture. The auxiliary molding part 30, the first tab 41, and the second tab 42 each protrude from the inner circumferential surface Ga of the seal ring 20.

The auxiliary molding part 30 is connected to a midpoint circumferentially of the seal ring 20 between the first end part E1 and the second end part E2. The auxiliary molding part 30 includes a pillar 31 and a branch 32. The pillar 31 is columnar and is centered on the central axis C. The branch 32 extends radially in a straight line from the outer circumferential surface of the pillar 31. A distal end (a gate) of the branch 32 is continuous with the inner circumferential surface Ga of the seal ring 20.

The first tab 41 and the second tab 42 are located at different circumferential positions on the seal ring 20. The first tab 41 is located between the first end part E1 and the auxiliary molding part 30. Specifically, the first tab 41 is connected in a vicinity of the first end part E1 of the seal ring 20. The second tab 42 is located between the second end part E2 and the auxiliary molding part 30. Specifically, the second tab 42 is located between the second end part E2 and the auxiliary molding part 30.

Each of the first tab 41 and the second tab 42 includes a grip 44 and a connector 45. The grip 44 is columnar and lies along the axis X. The connector 45 connects the seal ring 20 to the grip 44.

As shown in FIG. 5, along the axis X, a dimension H1 (height) of the grip 44 is greater than a dimension T (thickness) of the seal ring 20 (H1 > T). The grip 44 has an end part 441 in the X1 direction relative to the first surface F1 of the seal ring 20. The grip 44 also has an end part 442 in the X2 direction relative to the second surface F2 of the seal ring 20. Along the axis X, a dimension H2 of the connector 45 is less than the dimension T of the seal ring 20 (H2 < T).

### A-4: Injection Mold 200

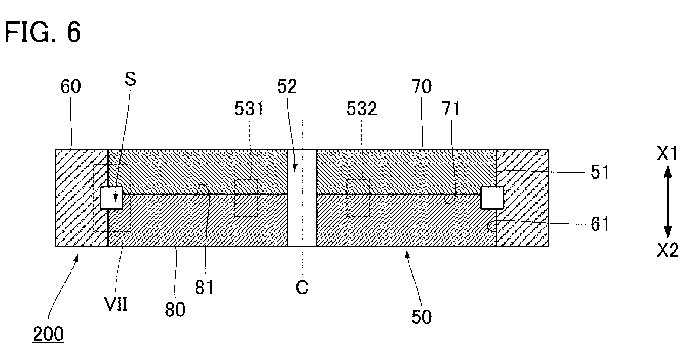

FIG. 6 is a sectional view of the injection mold 200. Description of the central axis C of the seal ring 20 will be given of the injection mold 200.

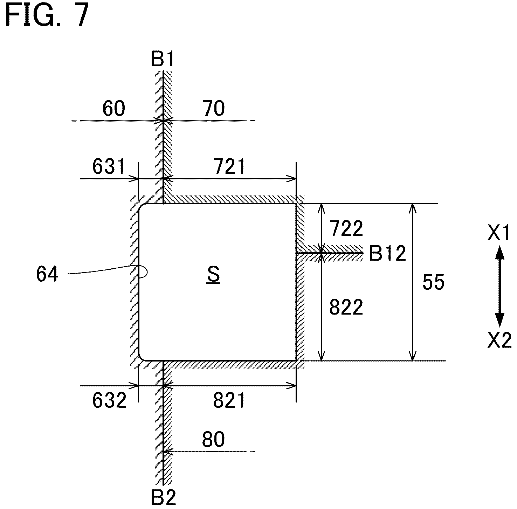

As shown in FIG. 6, the injection mold 200 of the first embodiment includes an inner mold 50 and an outer mold 60. The inner mold 50 is cylindrical or flat circular and is movable. The outer mold 60 is circular, surrounds the inner mold 50, and is fixed. An outer circumferential surface 51 of the inner mold 50 is in close contact with an inner circumferential surface 61 of the outer mold 60. An arc-shaped molding space S is used to form the seal ring 20 between the inner mold 50 and the outer mold 60. FIG. 7 is an enlarged view of a region VII shown in FIG. 6.

### A-4-1: Inner Mold 50

The inner mold 50 includes a first mold 70 and a second mold 80, which are configured to be separate from each other. The first mold 70 and the second mold 80 are each a columnar or discoid structure. The first mold 70 and the second mold 80 are each fixed and face each other. Specifically, the first mold 70 and the second mold 80 are arranged such that their faces are in close contact with each other. These faces are: a first surface (hereinafter, a "first opposing surface 71") of the first mold 70, which faces the second mold 80, and a second surface (hereinafter, a "second opposing surface 81") of the second mold 80, which faces the first mold 70.

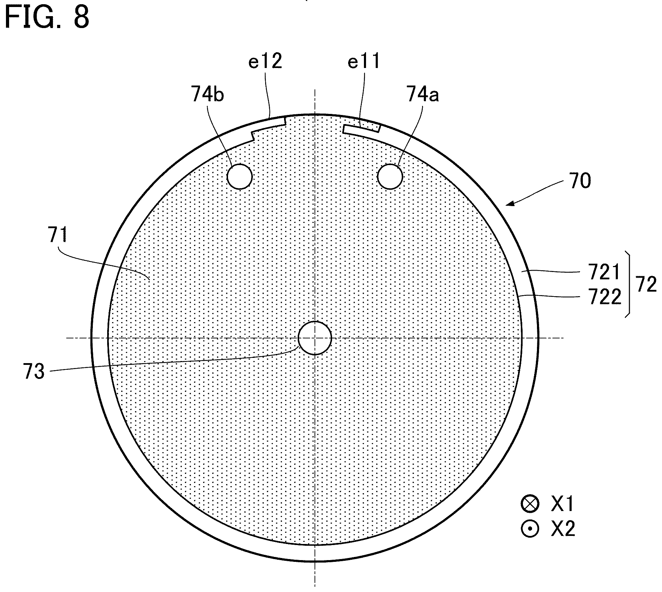

FIG. 8 is a plan view of the first opposing surface 71 of the first mold 70. In FIG. 8, for convenience of illustration, the first opposing surface 71 is depicted using stippling. As shown in FIG. 8, the first opposing surface 71 of the first mold 70 includes a molding channel 72, a channel 73, a molding hole 74a, and a molding hole 74b.

The molding channel 72 is a space used to mold the seal ring 20. Specifically, the molding channel 72 is an arc-shaped from an end part e11 to an end part e12, along the outer circumferential edge of the first opposing surface 71. The end part e11 corresponds to the first end part E1 of the seal ring 20, and the end part e12 corresponds to the second end part E2 of the seal ring 20.

As shown in FIGS. 7 and 8, the molding channel 72 is a groove defined by a first molding surface 721 and a first inner circumferential surface 722 intersecting with each other. The first molding surface 721 is an arc-shaped region in a plane orthogonal to the central axis C and corresponds to the bottom surface of the molding channel 72. The first inner circumferential surface 722 defines an arc around the central axis C and corresponds to the side surface of the molding channel 72. Thus, the first mold 70 includes the first molding surface 721 and the first inner circumferential surface 722.

The channel 73 shown in FIG. 8 is a space used to form a portion in the X1 direction in the pillar 31 of the auxiliary molding part 30. Specifically, the channel 73 is a through-hole that has a circular shape in cross section and is located at the center of the first opposing surface 71.

The molding hole 74a is a bottomed hole used to mold a portion including the end part 441 of the grip 44 of the first tab 41, and is formed in the vicinity of the end part e11. The molding hole 74b is a bottomed hole used to mold a portion including the end part 441 of the grip 44 of the second tab 42, and is formed in the vicinity of the end part e12. The molding holes 74a and 74b are each examples of a "first molding hole."

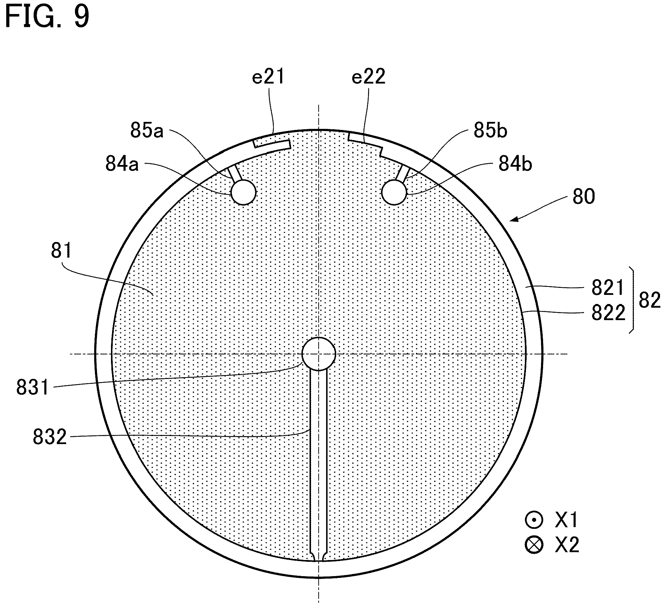

FIG. 9 is a plan view of the second opposing surface 81 of the second mold 80. In FIG. 9, the second opposing surface 81 is depicted using stippling for convenience of illustration. As shown in FIG. 9, the second opposing surface 81 of the second mold 80 includes a molding channel 82, a channel 831, a channel 832, a molding hole 84a, a molding hole 84b, a connecting path 85a, and a connecting path 85b.

The molding channel 82 is a space used to mold the seal ring 20. Specifically, the molding channel 82 is arc-shaped from an end part e21 to an end part e22, along the outer circumferential edge of the second opposing surface 81. The end part e21 corresponds to the first end part E1 of the seal ring 20, and the end part e22 corresponds to the second end part E2 of the seal ring 20.

As shown in FIGS. 7 and 9, the molding channel 82 is a groove defined by a second molding surface 821 and a second inner circumferential surface 822 intersecting with each other. The second molding surface 821 is an arc-shaped region in a plane orthogonal to the central axis C and corresponds to the bottom surface of the molding channel 82. The second inner circumferential surface 822 is an arc around the central axis C and corresponds to the side surface of the molding channel 82. Thus, the second mold 80 includes the second molding surface 821 and the second inner circumferential surface 822.

The channel 831 is a space used to form a portion located in the X2 direction in the pillar 31 of the auxiliary molding part 30. Specifically, the channel 831 is a through-hole that has a circular shape in cross section, and is located at the center of the second opposing surface 81. The channel 832 is a space used to form the branch 32 of the auxiliary molding part 30. The channel 832 extends radially from the channel 831, and thereby the channel 831 is connected to the molding channel 82. A portion of the channel 832 in the vicinity of the molding channel 82 is a gate that is narrow relative to the remaining portion of the channel 831.

The molding hole 84a is a bottomed hole used to mold a portion including the end part 442 of the grip 44 of the first tab 41. The connecting path 85a is a channel that connects the molding hole 84a to the molding channel 82. The molding hole 84a and the connecting path 85a are formed adjacent to the end part e21. The molding hole 84b is a bottomed hole used to mold a portion including the end part 442 of the grip 44 of the second tab 42. The connecting path 85b is a channel that connects the molding hole 84b to the molding channel 82. The molding hole 84b and the connecting path 85b are formed adjacent to the end part e22. The molding holes 84a and 84b are each examples of a "second molding hole."

As shown in FIG. 7, when the first opposing surface 71 and the second opposing surface 81 are in contact with each other, the first inner circumferential surface 722 of the first mold 70 and the second inner circumferential surface 822 of the second mold 80 are continuous with no step therebetween. As a result, an inner circumference molding surface 55 is provided. The inner circumference molding surface 55 is an inner wall surface used to form the inner circumferential surface Ga of the seal ring 20 in the molding space S. Thus, the inner mold 50 of the first embodiment is provided with the inner circumference molding surface 55 that forms the inner circumferential surface Ga of the seal ring 20.

Specifically, the first inner circumferential surface 722 is a molding surface used to form the first portion Ga1 of the inner circumferential surface Ga of the seal ring 20. The second inner circumferential surface 822 is a molding surface used to form the second portion Ga2 of the inner circumferential surface Ga of the seal ring 20. Thus, the first portion Ga1 corresponds to a region of the inner circumferential surface Ga formed by the first inner circumferential surface 722. The second portion Ga2 corresponds to a region in the inner circumferential surface Ga formed by the second inner circumferential surface 822.

As shown in FIG. 7, the boundary between the first inner circumferential surface 722 and the second inner circumferential surface 822 is located between the first surface F1 and the second surface F2 of the seal ring 20 in the axis X. Stated otherwise with reference to FIG. 3, the boundary B12 between the first inner circumferential surface 722 and the second inner circumferential surface 822 causes a linear flash L12 to be generated at a boundary between the first portion Ga1 and the second portion Ga2 of the inner circumferential surface Ga. Namely, the flash is located between the first surface F1 and the second surface F2. In the first embodiment, the linear flash L12, generated at the boundary between the first mold 70 and the second mold 80, is prevented from forming along an edge on the first surface F1 of the inner circumferential surface Ga of the seal ring 20. Alternatively, the linear flash L12 is prevented from forming along an edge on the second surface F2 thereof.

The channel 73 of the first mold 70 is connected to each of the channels 831 and 832 of the second mold 80 to provide a supply channel 52 shown in FIG. 6. The supply channel 52 is used to supply a resin material to the molding space S. The auxiliary molding part 30 is formed of the resin material that remains in the supply channel 52.

The molding hole 74a of the first mold 70 is connected to the molding hole 84a of the second mold 80 to define a first space 531. The first space 531 is used to form the grip 44 of the first tab 41. The first space 531 is connected to the molding space S via the connecting path 85a. The connecting path 85a is used to form the connector 45 of the first tab 41. The connecting path 85a may be provided on the first mold 70.

The molding hole 74b of the first mold 70 is connected to the molding hole 84b of the second mold 80 to define a second space 532. The second space 532 is used to form the grip 44 of the second tab 42. The second space 532 is connected to the molding space S via the connecting path 85b. The connecting path 85b is a space used to form the connector 45 of the second tab 42. The connecting path 85b may be provided on the first mold 70.

In the first embodiment, the spaces (the molding hole 74a and the molding hole 84a), which are used to form the grip 44 of the first tab 41, are formed in both the first mold 70 and the second mold 80. Similarly, the spaces (the molding hole 74b and the molding hole 84b), which are used to form the grip 44 of the second tab 42, are formed in both the first mold 70 and the second mold 80. This configuration enables the grip 44 to be formed with a sufficient dimension H1 along the axis X, and for the first tab 41 and the second tab 42, to be formed such that each can be easily gripped.

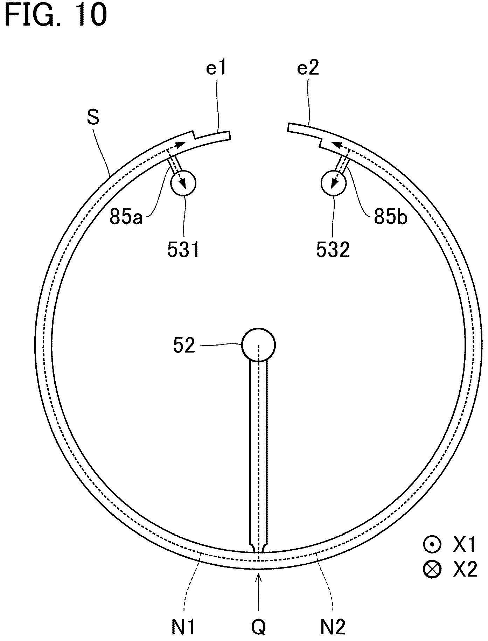

FIG. 10 is a plan view showing a positional relationship between the supply channel 52, the first space 531, the second space 532, and the molding space S. As shown in FIG. 10, the molding space S has two end parts, namely, an end part e1 and an end part e2, which are positioned circumferentially apart from each other. The end part e1 of the molding space S corresponds to the first end part E1 (the end parts e11 and e21) of the seal ring 20. The end part e2 (the end parts e12 and e22) corresponds to the second end part E2 of the seal ring 20.

As shown in FIG. 10, the supply channel 52 is connected to a point Q of the molding space S. The point Q corresponds to a single circumferential location of the seal ring 20. Specifically, the point Q is positioned at the circumferential midpoint between the end part e1 and the end part e2 within the molding space S. The point Q is expressed also as one point on the circumference of the molding space S. The point Q is an example of a "specific (circumferential) point."

The first space 531 is a space that is connected to a point between two points within the molding space S, namely, the point Q connected to the supply channel 52, and the end part e1. Specifically, the first space 531 is connected to a vicinity of the end part e1 of the molding space S. Similarly, the second space 532 is connected to a point between two points within the molding space S, namely, the point Q and the end part e2. Specifically, the second space 532 is connected in a vicinity of the end part e2 of the molding space S.

Thus, the interior space of the injection mold 200 includes the molding space S, the supply channel 52, the first space 531, and the second space 532. In the first embodiment, the first space 531 and the second space 532 are circumferentially located on both sides of the point Q, which is connected to the supply channel 52 within the molding space S. As a result, as indicated by the broken arrows shown in FIG. 10, a resin material supplied from the supply channel 52 can be filled in both ends (the end part e1 and the end part e2) of the molding space S, the first space 531, and the second space 532.

### A-4-2: Outer Mold 60

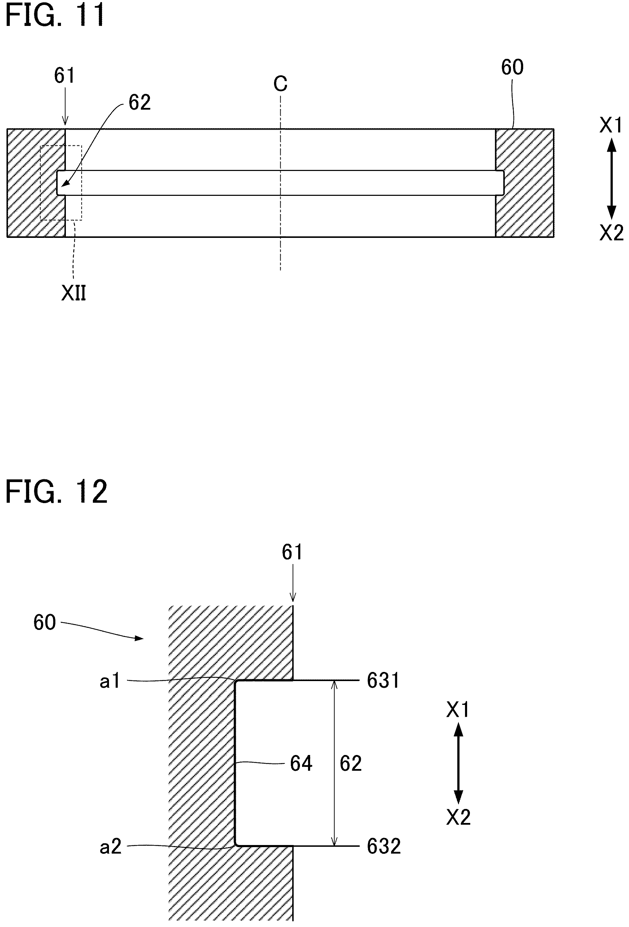

FIG. 11 is a sectional view of the outer mold 60. FIG. 12 is an enlarged view of a region XII shown in FIG. 11. As shown in FIGS. 11 and 12, a circumferential molding groove 62 is formed on the inner circumferential surface 61 of the outer mold 60. The molding groove 62 is a bottomed groove that has a rectangular shape in cross section. Specifically, as shown in FIG. 12, the molding groove 62 is defined by a first side surface 631, a second side surface 632, and an outer circumference molding surface 64.

The molding groove 62 has a bottom surface that forms the outer circumference molding surface 64 and defines a part of the molding space S. The outer circumference molding surface 64 is an arc-shaped inner wall surface that is used to form an outer circumferential surface Gb of the seal ring 20. As shown in FIG. 7, when the inner mold 50 and the outer mold 60 are fixed to each other (hereinafter, "mold-fixed state"), the inner circumference molding surface 55 of the inner mold 50 faces the outer circumference molding surface 64 of the outer mold 60 with a gap therebetween corresponding to the molding space S.

As shown in FIG. 12, the first side surface 631 and the second side surface 632 intersect with the outer circumference molding surface 64. The first side surface 631 and the second side surface 632 define an arc in a plane orthogonal to the central axis C and face each other, separated by a predetermined distance. The first side surface 631 is located relative to the second side surface 632 in the X1 direction.

As shown in FIG. 7, in the mold-fixed state, the first side surface 631 of the outer mold 60 and the first molding surface 721 of the inner mold 50 (the first mold 70) are in the same plane, which means that both surfaces are continuous with no step therebetween. The first side surface 631 and the first molding surface 721 are flat and are used to form the first surface F1 of the seal ring 20. Specifically, the first molding surface 721, an inner wall surface, is used to form the first inner region F 1a of the first surface F1. Similarly, the first side surface 631, an inner wall surface, is used to form the first outer region F1b of the first surface F1. In other words, the region formed by the first molding surface 721 within the first surface F1 defines the first inner region F1a. The region formed by the first side surface 631 within the first surface F1 defines the first outer region F1b.

In the mold-fixed state, the second side surface 632 of the outer mold 60 and the second molding surface 821 of the inner mold 50 (the second mold 80) are in the same plane, and thus both surfaces are continuous with no step therebetween. The second side surface 632 and the second molding surface 821 are flat and are used to form the second surface F2 of the seal ring 20. Specifically, the second molding surface 821, an inner wall surface, is used to form the second inner region F2a of the second surface F2. Similarly, the second side surface 632, an inner wall surface, is used to form the second outer region F2b of the second surface F2. In other words, the region formed by the second molding surface 821 within the second surface F2 defines the second inner region F2a. The region formed by the second side surface 632 within the second surface F2 defines the second outer region F2b.

As will be apparent from the foregoing description, the arc-shaped molding space S is surrounded by the inner circumference molding surface 55, the first molding surface 721, the second molding surface 821, the outer circumference molding surface 64, the first side surface 631, and the second side surface 632.

In the first embodiment, the boundary B1, located between the first molding surface 721 of the inner mold 50 and the first side surface 631 of the outer mold 60, faces the first surface F1 of the seal ring 20. The boundary B2, located between the second molding surface 821 of the inner mold 50 and the second side surface 632 of the outer mold 60, faces the second surface F2 of the seal ring 20. That is, the boundaries (B1 and B2) between the outer mold 60 and the inner mold 50 do not face the outer circumferential surface Gb of the seal ring 20. Consequently, on a surface of the injection mold 200 facing the outer circumferential surface Gb there is no parting line defining the boundary between the inner mold 50 and the outer mold 60. By use of this configuration, linear flashes, generated at the boundary between the inner mold 50 and the outer mold 60, are prevented from forming on the outer circumferential surface Gb of the seal ring 20. As a result, a need for a polishing operation to remove linear flashes from the outer circumferential surface Gb of the seal ring 20 is obviated, and high sealing performance of the outer circumferential surface Gb of the seal ring 20 is ensured.

The boundary B1 between the first side surface 631 and the first molding surface 721 faces the first surface F1 of the seal ring 20. As a result, as shown in FIG. 3, a circumferential linear flash L1 is formed between the first inner region F1a and the first outer region F1b of the first surface F1. Similarly, the boundary between the second side surface 632 and the second molding surface 821 faces the second surface F2 of the seal ring 20. As a result, a circumferential linear flash L2 is formed between the second inner region F2a and the second outer region F2b of the second surface F2.

As will be apparent from the foregoing description, presence of the linear flash L1 on the first surface F1 of the seal ring 20 and the linear flash L2 on the second surface F2 occurs when the boundaries (B1 and B2) between the inner mold 50 and the outer mold 60 face the first surface F1 and the second surface F2. According to the foregoing configuration, the boundary between the inner mold 50 and the outer mold 60 does not face the outer circumferential surface Gb of the seal ring 20. As a result, a need for a polishing operation to remove linear flashes from the outer circumferential surface Gb of the seal ring 20 is obviated, and high sealing performance of the outer circumferential surface Gb of the seal ring 20 is ensured. It is of note that the linear flash L1 is an example of a "first protrusion," and the linear flash L2 is an example of a "second protrusion."

As shown in FIG. 12, the outer mold 60 has a rounded corner a1 between the first side surface 631 and the outer circumference molding surface 64. The corner a1 is an arc-shaped surface by which the first side surface 631 and the outer circumference molding surface 64 are made continuous. The radius of the corner a1 is approximately 0.1 mm (R 0.1). As described with reference to FIG. 3, the corner A1, located between the first surface F1 and the outer circumferential surface Gb of the seal ring 20, is rounded. The corner a1 is an example of a "first corner."

The outer mold 60 also has a rounded corner a2 between the second side surface 632 and the outer circumference molding surface 64 of the outer mold 60. The corner a2 is an arc-shaped surface by which the second side surface 632 and the outer circumference molding surface 64 are made continuous. The radius of the corner a2 is approximately 0.1 mm (R 0.1). As described with reference to FIG. 3, the corner A2, located between the second surface F2 and the outer circumferential surface Gb of the seal ring 20, is rounded. The corner a2 is an example of a "second corner."

In the foregoing first embodiment, the corners a1 and a2 of the outer mold 60 are rounded. As a result, the corners A1 and A2 of the seal ring 20 are rounded without need of an operation, such as polishing.

### A-5: Method for Manufacturing Seal Ring 20

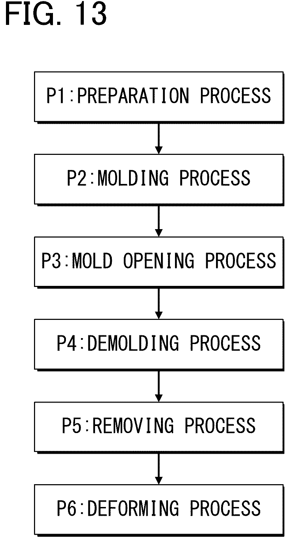

FIG. 13 is a flowchart of process for manufacturing the seal ring 20. First, the injection mold 200 is prepared in preparation process P1. The injection mold 200 includes an inner mold 50, which includes a first mold 70 and the second mold 80, and an outer mold 60. The injection mold 200 is a fixed mold.

At molding process P2 after the preparation process P1, an intermediate molded object 300 (shown in FIG. 4) is formed by injection molding using the injection mold 200. Specifically, when a liquid resin material is supplied to the interior space of the injection mold 200, an intermediate molded object 300 is formed by curing the resin material. The intermediate molded object 300 includes an auxiliary molding part 30, a first tab 41, and a second tab 42 in addition to a seal ring 20 for final manufacture. At a stage of the molding process P2, the first end part E1 and the second end part E2 of the seal ring 20 are circumferentially spaced apart from each other.

As indicated by the arrows shown in FIG. 10, the resin material supplied to the supply channel 52 flows through the molding space S from the point Q, and then branches into a first component N1 toward the end part e1 and a second component N2 toward the end part e2 within the molding space S. A portion of the first component N1 reaches the end part e1, and a remaining portion flows into the first space 531 from the connecting path 85a. Bubbles produced within the molding space S are carried into the first space 531 by the flow of the resin material, preventing the bubbles from reaching the end part e1. Similarly, a portion of the second component N2 reaches the end part e2, and a remaining portion flows in the second space 532 from the connecting path 85b. Bubbles produced within the molding space S are carried into the second space 532 by the flow of the resin material, preventing the bubbles from reaching the end part e2.

As will be apparent from the foregoing description, the first space 531 and the second space 532 act as space for capturing bubbles within the molding space S. As a result, the resin material can fully extend across the molding space S. Thus, the first space 531 and the second space 532 each serve to enhance the filling property of the resin material in the molding space S. The enhanced filling property ensures that the seal ring 20 is formed without defects caused by bubbles.

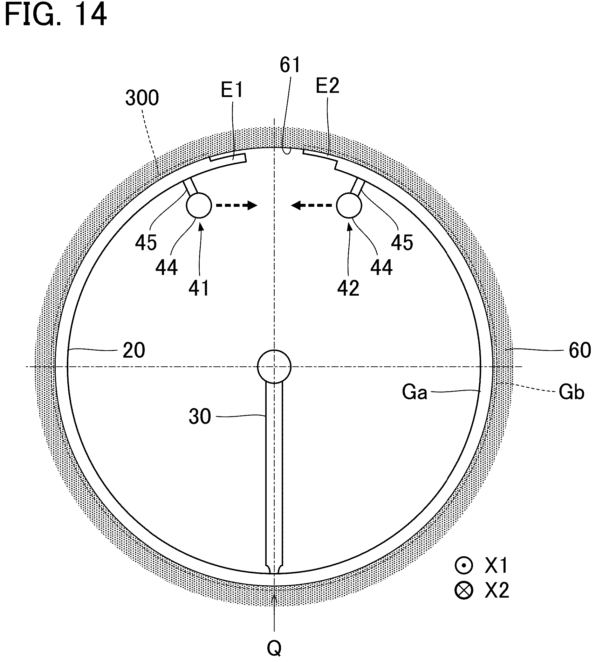

At mold opening process P3 after the molding process P2 shown in FIG. 13, the inner mold 50 is removed. Specifically, the first mold 70 and the second mold 80 are sequentially removed from the outer mold 60. As shown in FIG. 14, upon start of the mold opening process P3, the outer circumferential surface Gb, the first outer region F1b, and the second outer region F2b of the seal ring 20 included in the intermediate molded object 300 are fixed to the outer mold 60. In this state, the auxiliary molding part 30, the first tab 41, and the second tab 42 are protruded from the inner circumferential surface Ga of the seal ring 20.

At demolding process P4 after the mold opening process P3, the intermediate molded object 300 is demolded from the outer mold 60. The first tab 41 and the second tab 42 are moved to enable the intermediate molded object 300 to be demolded from the outer mold 60 during the demolding process P4. In one example, each of the grip 44 of the first tab 41 and the second tab 42 is gripped for movement by a gripping mechanism, such as a jig. Thus, under action of the gripping mechanism, the first tab 41 and the second tab 42 are moved. Specifically, the gripping mechanism moves the first tab 41 and the second tab 42 in a plane orthogonal to the axis X. In one example, as indicated by the broken arrows shown in FIG. 14, the first tab 41 and the second tab 42 are circumferentially moved closer to each other by the gripping mechanism. In other words, the first tab 41 and the second tab 42 are manipulated so as to decrease the diameter of the seal ring 20. As the first tab 41 and the second tab 42 are moved closer to each other, the seal ring 20 is gradually peeled off the outer mold 60, starting at the first end part E1 and the second end part E2, and advancing toward the point Q. As an end result, the seal ring 20 is entirely demolded from the outer mold 60.

In the foregoing first embodiment, the first tab 41 and the second tab 42 are molded along with the seal ring 20, and the intermediate molded object 300 is demolded from the outer mold 60 by moving the molded first tab 41 and the second tab 42. As a result, the intermediate molded object 300 can be easily demolded. Specifically, the intermediate molded object 300 can be demolded from the outer mold 60 by a simple process of moving the first tab 41 and the second tab 42 closer to each other. Particularly in the first embodiment, the first tab 41 is formed in the vicinity of the first end part E1, and the second tab 42 is formed in the vicinity of the second end part E2. This configuration significantly enhances ease with which the intermediate molded object 300 can be demolded from the outer mold 60, as compared to an aspect where the first tab 41 is positioned distant from the first end part E1, or an aspect where the second tab 42 is positioned distant from the second end part E2.

At removing process P5 after the demolding process P4 sown in FIG. 13, the auxiliary molding part 30, the first tab 41, and the second tab 42 are removed from the intermediate molded object 300. In one example, the auxiliary molding part 30, the first tab 41, and the second tab 42 are cut off from the inner circumferential surface Ga by a cutting mechanism, such as a utility knife. Cut marks on the inner circumferential surface Ga can then be polished.

Immediately after the removing process P5, the first end part E1 and the second end part E2 of the seal ring 20 are circumferentially spaced apart from each other. At deforming process P6 after the removing process P5, the shape of the seal ring 20 is adjusted. Specifically, the seal ring 20 is adjusted to ensure that the first end part E1 and the second end part E2 overlap circumferentially. By completing these processes, production of the seal ring 20 is completed.

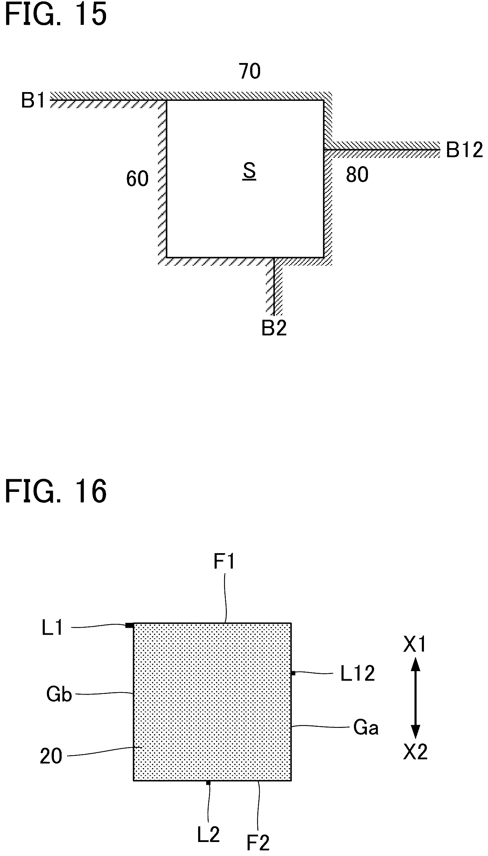

From a perspective of simplifying of demolding from the injection mold 200, an aspect where the outer mold 60 and the inner mold 50 have shapes such as shown in FIG. 15 is also conceivable (hereinafter, "comparative example"). In the comparative example, the molding space S is defined by the upper surface of the outer mold 60 and the lower surface of the first mold 70, which meet at the boundary B1. The first mold 70 is removed after the resin material filled in the molding space S is cured. With the first mold 70 removed, by moving the seal ring 20 upward the seal ring 20 can be easily demolded from the outer mold 60.

However, in the comparative example shown in FIG. 16, a linear flash L1, at the boundary B1 between the outer mold 60 and the first mold 70 occurs, along the edge of the outer circumferential surface Gb of the seal ring 20 on the side of the first surface F1. The linear flash L1 protrudes outward from the outer circumferential surface Gb.

As explained with reference to FIG. 1, the outer circumferential surface Gb is in contact with the inner circumferential surface 113 of the housing 11. Unevenness of the outer circumferential surface Gb reduces contact with the inner circumferential surface 113 of the housing 11. To maintain a high level of sealing performance of the seal ring 20, it is necessary for the outer circumferential surface Gb to have a high degree of flatness. Therefore, in the comparative example, a flattening process, such as polishing, is required to remove the linear flash L1 on the outer circumferential surface Gb.

In the first embodiment, in contrast to the comparative example, the boundaries (B1 and B2), located between the inner mold 50 and the outer mold 60, face the first surface F1 and the second surface F2 of the seal ring 20. As a result, a linear flash L1 is not formed formed on the outer circumferential surface Gb. The first embodiment eliminates the need for the flattening process required in the comparative example. Since the flattening process is omitted, the configuration and processing according to the first embodiment enables the manufacturing costs of the seal ring 20 to be reduced as compared to the comparative example.

In the first embodiment, the seal ring 20 is retained between the first side surface 631 and the second side surface 632 of the outer mold 60 after the mold opening process P3. As a result, the seal ring 20 may fail to be demolded from the outer mold 60 only by moving the seal ring 20 along the axis X. Given the circumstances, the first embodiment adapts the demolding process P4 for demolding the intermediate molded object 300 from the outer mold 60 by moving the first tab 41 and the second tab 42. This method enables the intermediate molded object 300 to be easily demolded from the outer mold 60, even when the seal ring 20 is retained between the first side surface 631 and the second side surface 632 of the outer mold 60. As will be apparent from the foregoing description, the first embodiment achieves close contact of the outer circumferential surface Gb and ease of demolding the intermediate molded object 300, and thus a reduction in manufacturing costs. The flattening process carried out on the outer circumferential surface Gb is not excluded from the scope of this disclosure.

The first tab 41 and the second tab 42, used for demolding of the intermediate molded object 300, are formed by the first space 531 and the second space 532 to ensure filling of the resin material within the molding space S. Thus, the first tab 41 and the second tab 42 serves the following two purposes: ensuring filling of the resin material and ensuring demoldability of the intermediate molded object 300. This method also provides a simplified process for manufacturing the seal ring 20, as compared to an aspect where those two purposes are achieved by different elements.

### B: Second Embodiment

A second embodiment of this disclosure will now be described below. In each of respective modifications exemplified below, have substantially the same functions as those described in the first embodiment are denoted by like reference signs used in the first embodiment, and detailed explanation thereof is omitted as appropriate.

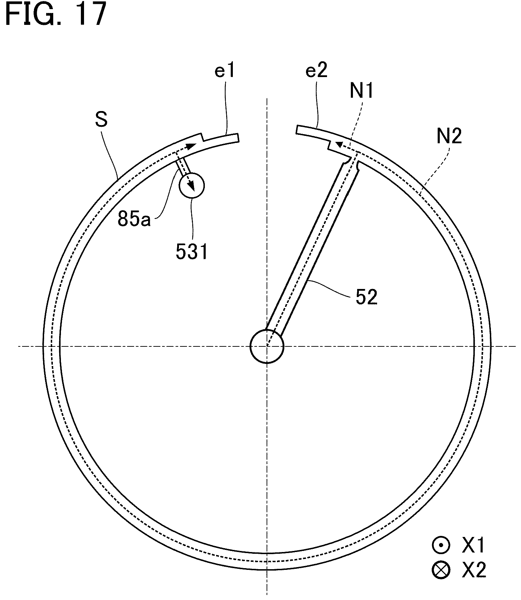

FIG. 17 is an explanatory diagram of the interior space of the injection mold 200 according to the second embodiment. As shown in FIG. 17, the injection mold 200 of the second embodiment includes the supply channel 52 and the first space 531 in addition to the molding space S. Similarly to the first embodiment, the supply channel 52 is used to form the auxiliary molding part 30, and the first space 531 is used to form the first tab 41. In the second embodiment, the injection mold 200 of does not include the second space 532 of the first embodiment.

The supply channel 52 of the second embodiment is connected to the molding space S in a vicinity of the end part e2. The first space 531 is connected to the molding space S in a vicinity of the end part e1. As a result, the first component N1 of the resin material supplied to the molding space S reaches the end part e2 from the supply channel 52, and the second component N2 flows through the arc-shaped molding space S to reach the end part e1. A portion of the second component N2 flows through the first space 531.

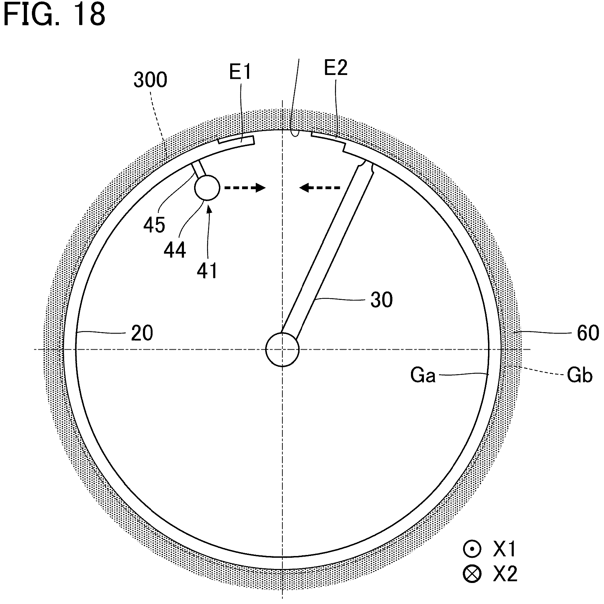

FIG. 18 is a plan view showing the intermediate molded object 300 immediately after the mold opening process P3. Upon start of the mold opening process P3, similarly to the first embodiment, the outer circumferential surface Gb, the first outer region F1b, and the second outer region F2b of the seal ring 20 included in the intermediate molded object 300 are fixed to the outer mold 60. In the second embodiment, the auxiliary molding part 30 and the first tab 41 are protruded from the inner circumferential surface Ga of the seal ring 20. The auxiliary molding part 30 is connected in a vicinity of the second end part E2, and the first tab 41 is connected in a vicinity of the first end part E1.

In the demolding process P4 of the second embodiment, the intermediate molded object 300 is demolded from the outer mold 60 by moving the first tab 41 and the auxiliary molding part 30. In one example, as indicated by the broken arrows shown in FIG. 18, the first tab 41 and the auxiliary molding part 30 are circumferentially moved closer to each other by a gripping mechanism. As the first tab 41 and the auxiliary molding part 30 are moved closer to each other, the seal ring 20 is gradually peeled off from the outer mold 60, starting at the first end part E1 and the second end part E2. As an end result, the seal ring 20 is entirely demolded from the outer mold 60.

The second embodiment can also provide effects substantially the same as those of the first embodiment. In the second embodiment, omission of the second tab 42 of the first embodiment obviates the need for removal of the second tab 42 during the removing process P5. As a result, the removing process P5 is simplified relative to that of the first embodiment.

### C: Third Embodiment

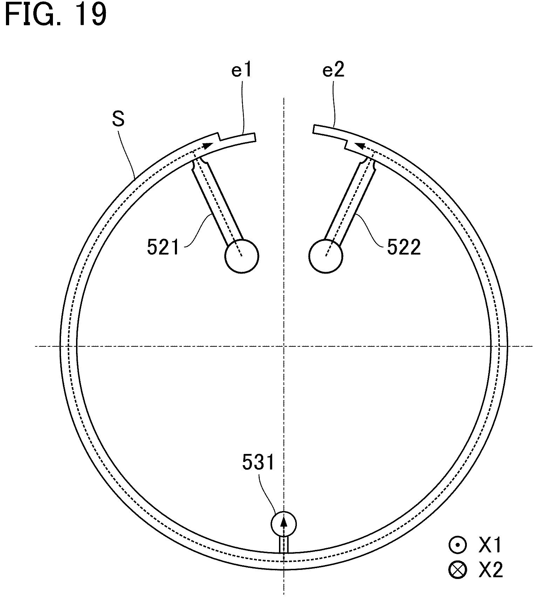

FIG. 19 is an explanatory diagram of the interior space of the injection mold 200 according to a third embodiment. As shown in FIG. 19, the injection mold 200 of the third embodiment includes a first supply channel 521, a second supply channel 522, and the first space 531 in addition to the molding space S. The first supply channel 521 and the second supply channel 522 are used to supply a resin material to the molding space S in the molding process P2. The first supply channel 521 is connected in a vicinity of the end part e1 of the molding space S. The second supply channel 522 is connected in a vicinity of the end part e2 of the molding space S. The first space 531 is used to form the first tab 41 and is connected to the midpoint between the end part e1 and the end part e2 of the molding space S in the circumferential direction.

At the molding process P2, a portion of the resin material supplied to the molding space S reaches the end part e1 from the first supply channel 521, and a remaining portion of the resin material flows toward the arc-shaped first space 531. Similarly, a portion of the resin material supplied to the molding space S reaches the end part e2 from the second supply channel 522, and a remaining portion of the resin material flows toward the arc-shaped first space 531. The resin materials supplied from the first supply channel 521 and the second supply channel 522 combine and flow into the first space 531.

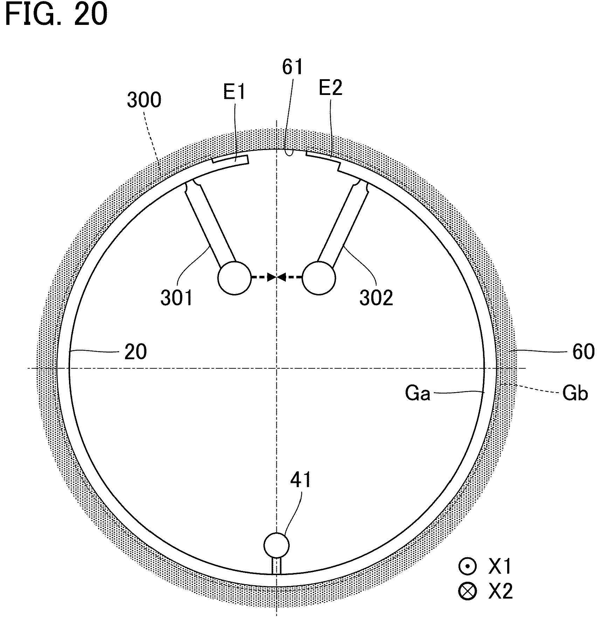

FIG. 20 is a plan view showing the intermediate molded object 300 immediately after the mold opening process P3. Upon start of the mold opening process P3, the outer circumferential surface Gb, the first outer region F1b, and the second outer region F2b of the seal ring 20 included in the intermediate molded object 300 are fixed to the outer mold 60. In the third embodiment, a first auxiliary molding part 301, a second auxiliary molding part 302, and the first tab 41 are protruded from the inner circumferential surface Ga of the seal ring 20.

The first auxiliary molding part 301 is molded by the first supply channel 521 and is connected in a vicinity of the first end part E1 of the seal ring 20. The second auxiliary molding part 302 is molded by the second supply channel 522 and is connected in a vicinity of the second end part E2 of the seal ring 20.

In the demolding process P4 of the third embodiment, the intermediate molded object 300 is demolded from the outer mold 60 by moving the first auxiliary molding part 301 and the second auxiliary molding part 302. In one example, as indicated by broken arrows shown in FIG. 20, the first auxiliary molding part 301 and the second auxiliary molding part 302 are circumferentially moved closer to each other by a gripping mechanism. As the first auxiliary molding part 301 and the second auxiliary molding part 302 are moved closer to each other, the seal ring 20 is gradually peeled off the outer mold 60, starting from the first end part E1 and the second end part E2. As an end result, the seal ring 20 is entirely demolded from the outer mold 60.

The third embodiment can also provide effects substantially the same as those of the first embodiment. In the third embodiment, the resin material can be efficiently supplied to the molding space S through the first supply channel 521 and through the second supply channel 522.

As will be apparent from the description of the first to third embodiments, the intermediate molded object 300 is demolded from the outer mold 60 by moving protrusions connected to the inner circumferential surface Ga of the seal ring 20 during the demolding process P4. The first tab 41 and the second tab 42 in the first embodiment, the first tab 41 and the auxiliary molding part 30 in the second embodiment (FIG. 18), and the first auxiliary molding part 301 and the second auxiliary molding part 302 in the third embodiment (FIG. 20) are each examples of a "protrusion."

Specifically, in the first embodiment, the first tab 41 is an example of a "first protrusion," and the second tab 42 is an example of a "second protrusion." Alternatively, the first tab 41 is an example of a "second protrusion," and the second tab 42 is an example of a "first protrusion." In the second embodiment, the first tab 41 is an example of a "first protrusion," and the auxiliary molding part 30 is an example of a "second protrusion." Alternatively, the first tab 41 is an example of a "second protrusion," and the auxiliary molding part 30 is an example of a "first protrusion." In the third embodiment, the first auxiliary molding part 301 is an example of a "first protrusion," and the second auxiliary molding part is an example of a "second protrusion." Alternatively, the first auxiliary molding part 301 is an example of a "second protrusion," and the second auxiliary molding part is an example of a "first protrusion."

### D: Modifications

Specific modifications of the foregoing embodiments are described below. Two or more modifications may be combined with each other as, so long such combination does not give rise to any contradiction.

(1) In the foregoing embodiments, two protrusions are moved to demold the intermediate molded object 300 from the outer mold 60 during the demolding process P4. However, the number of protrusions for movement during the demolding process P4 is not limited to those of the foregoing embodiment. Only one protrusion may be moved demold the intermediate molded object 300 during the demolding process P4.

In one example in the first embodiment, only one of the first tab 41 or the second tab 42 may be moved. In the second embodiment, only one of the first tab 41 or the auxiliary molding part 30 may be moved. In the third embodiment, only one of the first auxiliary molding part 301 or the second auxiliary molding part 302 may be moved. Alternatively, three or more protrusions may be moved to demold the intermediate molded object 300 from the outer mold 60.

(2) An example of the seal ring 20 is described in the foregoing embodiments. However, the resin molded object to which this disclosure is applied is not limited to such a seal ring 20. This disclosure is also applicable to a backup ring that is positioned parallel to an annular seal to prevent the seal from intruding into a gap, similar to the foregoing embodiments. The backup ring is an arc-shaped member obtained by cutting a circular ring member at one position. Specifically, the backup ring is an arc-shaped resin molded object including a first end part and a second end part similarly to the seal ring 20 in the foregoing embodiments.

(3) In the foregoing embodiments, both corners A1 and A2 of the seal ring 20 are rounded. However, only one may be rounded. In this case, one of the corner a1 or the corner a2 of the outer mold 60 may be rounded. Alternatively, neither of the corner A1 or the corner A2 may be rounded, and neither of the corner a1 or the corner a2 may be rounded.

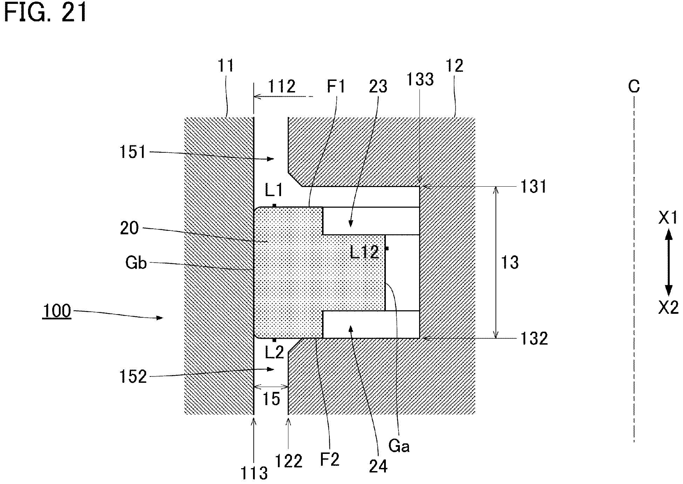

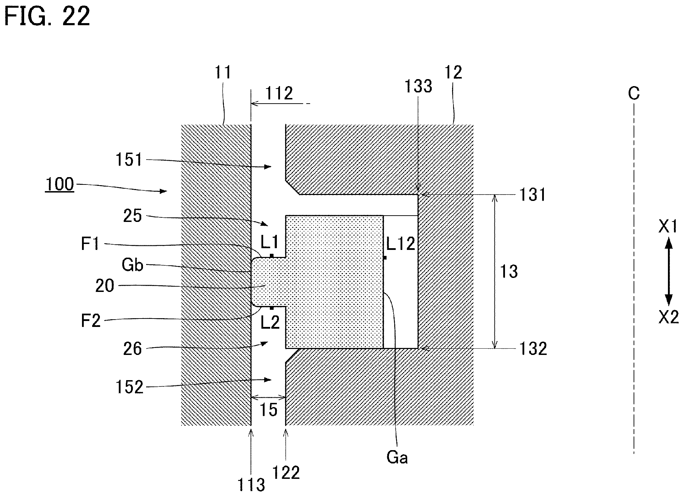

(4) In the foregoing embodiments, an example is given of the seal ring 20 with a substantially rectangular in cross section. However, the shape in cross section of the seal ring 20 is not limited thereto. A first modification shown in FIG. 21, or a second modification shown in FIG. 22 can also be envisaged.

### First Modification

As shown in FIG. 21, the seal ring 20 of the first modification has a step 23 and a step 24. The step 23 is an arc-shaped recessed part along the inner circumferential edge of the first surface F1. The step 24 is an arc-shaped recessed part along the inner circumferential edge of the second surface F2. The seal ring 20 of the first modification has a T-shape in cross-section.

A linear flash L1 is formed on a region of the first surface F1 other than the step 23, and a linear flash L2 is formed on a region of the second surface F2 other than the step 24. In the first modification, an area (a sliding area) where the second surface F2 is in contact with the side surface 132 of the mounting groove 13 is reduced as compared to that in the foregoing embodiments. This reduction of the area reduces a sliding resistance between the second surface F2 and the side surface 132, and consequently reduces both friction and torque therebetween.

### Second Modification

As shown in FIG. 22, the seal ring 20 of the second modification has a step 25 and a step 26. The step 25 is an arc-shaped recessed part along the outer circumferential edge of a surface of the seal ring 20 facing in the X1 direction. The bottom surface of the step 25 corresponds to the first surface F1. The step 26 is an arc-shaped recessed part along the outer circumferential edge of a surface of the seal ring 20 facing in the X2 direction. The bottom surface of the step 26 corresponds to the second surface F2. A linear flash L1 is formed on the first surface F1, and a linear flash L2 is formed on the second surface F2.

The outer circumferential surface Gb of the second modification is an outer circumferential surface of an arc-shaped extending outward from the inner wall surfaces of the steps 25 and 26. In the second modification, an area (a sliding area) where the outer circumferential surface Gb is in contact with the inner circumferential surface 113 of the shaft opening 112 is reduced relative to that in the foregoing embodiments. This reduction of the area reduces a sliding resistance between the outer circumferential surface Gb and the inner circumferential surface 113, and consequently reduces both friction and torque therebetween.

(5) In the foregoing embodiments, an example is given of the sealing structure 100 is for use in a transmission. However, use applications of the sealing structure 100 are not limited to such an example. The sealing structures 100 of the foregoing embodiments may be used for any appropriate application, such as an engine seal, a differential seal, a motor seal, or a hub bearing seal.

(6) The notation "n-th" (n is a natural number) in this application is used only as formal and expedient indicators (labels) to distinguish the components from each other and do not have any substantial meaning. There is no restriction placed on the position, order of manufacture, or the like of each component, and there is no limitation inferable from use of the notation "n-th."

### E: Appendices

The following example configurations are derivable from the foregoing embodiments.

A method for manufacturing a resin molded object according to one aspect (Aspect 1) of this disclosure is a method for manufacturing an arc-shaped resin molded object with a first end part and a second end part, in which the resin molded object has a first surface and a second surface opposite each other along an axis, and an inner circumferential surface and an outer circumferential surface between the first surface and the second surface. The method includes: forming an intermediate molded object including: the resin molded object; and one or more protrusions connected to the inner circumferential surface of the resin molded object, by supplying a resin material to an interior space of an injection mold including: an inner mold with an inner circumference molding surface used to form the inner circumferential surface; and an outer mold with an outer circumference molding surface used to form the outer circumferential surface; removing the inner mold; and demolding the intermediate molded object from the outer mold by moving the one or more protrusions.

In this aspect, the one or more protrusions are molded along with the resin molded object, and a resin molded object is demolded from the outer mold by moving the molded one or more protrusions. As a result, the resin molded object can be easily demolded. The removal of the one or more protrusions from the intermediate molded object may be implemented after the demolding.

In an example (Aspect 2) of the first aspect, the injection mold has an opposing surface facing the outer circumferential surface, and the opposing surface has no parting line corresponding to a boundary between the inner mold and the outer mold.

In an example (Aspect 3) of Aspect 1 or 2, the one or more protrusions include a first protrusion and a second protrusion. The demolding includes demolding the resin molded object from the outer mold by moving the first protrusion and the second protrusion closer to each other.

According to this aspect, a resin molded object can be demolded from the outer mold by a simple process of moving the first protrusion and the second protrusion closer to each other.

In an example (Aspect 4) of Aspect 3, the interior space includes: an arc-shaped molding space used to form the resin molded object; a supply channel used to supply the resin material to the molding space; a first space used to form the first protrusion; and a second space used to form the second protrusion. The supply channel is connected to a specific circumferential point of the molding space. The first space is connected to a point between the specific circumferential point and an end part corresponding to the first end part, within the molding space. The second space is connected to a point between the specific circumferential point and an end part corresponding to the second end part, within the molding space.

According to this aspect, the first and second spaces are located on both sides of a specific position with which the supply channel (a gate) is connected circumferentially in the molding space. As a result, a resin material supplied from the supply channel can be filled in both ends of the molding space, the first space, and the second space. Further, the first protrusion is formed in the vicinity of the first end part, and the second protrusion is formed in the vicinity of the second end part. According to this aspect, a resin molded object can be easily demolded from the outer mold by moving the first protrusion and the second protrusion closer to each other.

In an example (Aspect 5) of any of Aspects 1 to 4, a circumferential molding groove is formed on an inner circumferential surface of the outer mold. The molding groove has: a first side surface that forms a first outer region of the first surface, the outer circumference molding surface serving as a bottom surface; and a second side surface that forms a second outer region of the second surface. The inner mold includes: a first molding surface that forms a first inner region of the first surface inside the first outer region; and a second molding surface that forms a second inner region of the second surface inside the second outer region.

In this aspect, the boundary, located between the first side surface of the outer mold and the first molding surface of the inner mold, faces the first surface of a resin molded object. Further, the boundary, located between the second side surface of the outer mold and the second molding surface of the inner mold, faces the second surface of the resin molded object. That is, the boundary between the outer mold and the inner mold does not face the outer circumferential surface of the resin molded object.

According to this configuration, linear flashes, generated at the boundary between the outer mold and the inner mold, are prevented from forming on the outer circumferential surface of a resin molded object. As a result, a need for removing flashes by polishing of the outer circumferential surface of the resin molded object is obviated, and a high sealing performance of the outer circumferential surface of a resin molded object is ensured.

In an example (Aspect 6) of Aspect 5, at least one of a first corner between the first side surface and the outer circumference molding surface, and a second corner between the second side surface and the outer circumference molding surface is rounded.

In this aspect, at least one of (i) the corner between the first side surface and the outer circumference molding surface, and (i) the corner between the second side surface and the outer circumference molding surface is rounded. As a result, the corner and at least one of the two, the first and second surfaces of a resin molded object, and the outer circumferential surface can be rounded without the need of an operation, such as polishing.

In an example (Aspect 7) of Aspect 5 or 6, the inner mold includes: a first mold including: the first molding surface; and a first inner circumferential surface of the inner circumference molding surface; and a second mold including: the second molding surface; and a second inner circumferential surface of the inner circumference molding surface, and a boundary between the first inner circumferential surface and the second inner circumferential surface is located between the first surface and the second surface and lies along an axis.

In this aspect, the boundary, located between the first inner circumferential surface of the first mold and the second inner circumferential surface of the second mold, is located between the first surface and the second surface. As a result, a linear flash, generated at the boundary between the first mold and the second mold, is prevented from forming along an edge of the inner circumferential surface of a resin molded object on the side of the first surface or on the side of the second surface.

In an example (Aspect 8) of Aspect 7, the first mold has a first opposing surface that faces the second mold, in which the first opposing surface has a first molding hole used to form a portion of the one or more protrusions. The second mold has a second opposing surface that faces the first mold, in which the second opposing surface has a second molding hole used to form a remaining portion of the one or more protrusions.

In this aspect, spaces (the first molding hole and the second molding hole) used to form the protrusions are formed on both the first mold and the second mold. This results in formation along the axis of protrusions of a sufficient dimension to be easily gripped.

An injection mold according to one aspect (Aspect 9) of this disclosure is an injection mold used for manufacture of an arc-shaped resin molded object with a first end part and a second end part, in which the resin molded object has a first surface and a second surface opposite each other along an axis, and an inner circumferential surface and an outer circumferential surface between the first surface and the second surface. The injection mold includes: an inner mold that has an inner circumference molding surface forming the inner circumferential surface; and an outer mold that has an outer circumference molding surface forming the outer circumferential surface. A circumferential molding groove is formed on an inner circumferential surface of the outer mold. The molding groove has: a first side surface that forms a first outer region of the first surface, the outer circumference molding surface serving as a bottom surface; and a second side surface that forms a second outer region of the second surface. The inner mold includes: a first molding surface that forms a first inner region of the first surface inside the first outer region; and a second molding surface that forms a second inner region of the second surface inside the second outer region.

In an example (Aspect 10) of Aspect 9, the injection mold further includes an opposing surface that faces the outer circumferential surface. The opposing surface has no parting line corresponding to a boundary between the inner mold and the outer mold throughout an entire range including a circumferential edge of the opposing surface.

A resin molded object according to one aspect (Aspect 11) of this disclosure is an arc-shaped resin molded object including: a first surface and a second surface opposite each other along an axis; an inner circumferential surface and an outer circumferential surface between the first surface and the second surface; a first end part; a second end part; a straight first protrusion formed circumferentially between a first outer region and a first inner region of the first surface, in which the first outer region includes an outer circumferential edge of the first surface, and in which the first inner region is located inside the first outer region and includes an inner circumferential edge of the first surface; and a straight second protrusion formed circumferentially between a second outer region and a second inner region of the second surface, in which the second outer region includes an outer circumferential edge of the second surface, and in which the second inner region is located inside the second outer region and includes an inner circumferential edge of the second surface.

In an aspect (Aspect 12) of Aspect 11, the opposing surface has no linear flash, corresponding to a parting line of an injection mold, on the outer circumferential surface throughout an entire range including a circumferential edge of the outer circumferential surface.

### Description of Reference Signs

100... sealing structure, 11... housing, 12... shaft, 13... mounting groove, 15... gap, 20... seal ring, 21... abutment part, 22...main part, 30... auxiliary molding part, 31... pillar, 32... branch, 41... first tab, 42... second tab, 44... grip, 45... connector, 50... inner mold, 51... outer circumferential surface, 52... supply channel, 55... inner circumference molding surface, 60... outer mold, 61... inner circumferential surface, 62... molding groove, 64... outer circumference molding surface, 70... first mold, 71... first opposing surface, 72... molding channel, 73... channel, 74a... molding hole, 74b... molding hole, 80... second mold, 81... second opposing surface, 82... molding channel, 84a... molding hole, 84b... molding hole, 85a... connecting path, 85b... connecting path, 200... injection mold, 300... intermediate molded object, 301... first auxiliary molding part, 302... second auxiliary molding part, 521... first supply channel, 522... second supply channel, 531... first space, 532... second space, 631... first side surface, 632... second side surface, 721... first molding surface, 722... first inner circumferential surface, 821... second molding surface, 822... second inner circumferential surface.

## Claims

1. A method for manufacturing an arc-shaped resin molded object with a first end part and a second end part, the resin molded object having a first surface and a second surface opposing each other along an axis, and an inner circumferential surface and an outer circumferential surface between the first surface and the second surface, the method comprising:
forming an intermediate molded object including:
the resin molded object; and
one or more protrusions connected to the inner circumferential surface of the resin molded object,
by supplying a resin material to an interior space of an injection mold including:
an inner mold with an inner circumference molding surface used to form the inner circumferential surface; and
an outer mold with an outer circumference molding surface used to form the outer circumferential surface;
removing the inner mold; and
demolding the intermediate molded object from the outer mold by moving the one or more protrusions.

2. The method for manufacturing the resin molded object, according to claim 1, wherein:
the injection mold has an opposing surface facing the outer circumferential surface, and
the opposing surface has no parting line corresponding to a boundary between the inner mold and the outer mold.

3. The method for manufacturing the resin molded object, according to claim 1 or 2, wherein:
the one or more protrusions include a first protrusion and a second protrusion, and
the demolding includes demolding the resin molded object from the outer mold by moving the first protrusion and the second protrusion closer to each other.

4. The method for manufacturing the resin molded object, according to claim 3, wherein:
the interior space includes:
an arc-shaped molding space used to form the resin molded object;
a supply channel used to supply the resin material to the molding space;
a first space used to form the first protrusion; and
a second space used to form the second protrusion,
the supply channel is connected to a specific circumferential point of the molding space,
the first space is connected to a point between the specific circumferential point and an end part corresponding to the first end part, within the molding space, and
the second space is connected to a point between the specific circumferential point and an end part corresponding to the second end part, within the molding space.

5. The method for manufacturing the resin molded object, according to any of claims 1 to 4, wherein:
a circumferential molding groove is formed on an inner circumferential surface of the outer mold,
the molding groove has:
a first side surface that forms a first outer region of the first surface, the outer circumference molding surface serving as a bottom surface; and
a second side surface that forms a second outer region of the second surface, and
the inner mold includes:
a first molding surface that forms a first inner region of the first surface inside the first outer region; and
a second molding surface that forms a second inner region of the second surface inside the second outer region.

6. The method for manufacturing the resin molded object, according to claim 5,
wherein at least one of a first corner between the first side surface and the outer circumference molding surface, and a second corner between the second side surface and the outer circumference molding surface is rounded.

7. The method for manufacturing the resin molded object, according to claim 5 or 6, wherein:
the inner mold includes:
a first mold including:
the first molding surface; and
a first inner circumferential surface of the inner circumference molding surface; and
a second mold including:
the second molding surface; and
a second inner circumferential surface of the inner circumference molding surface, and
a boundary between the first inner circumferential surface and the second inner circumferential surface is located between the first surface and the second surface and lies along an axis.

8. The method for manufacturing the resin molded object, according to claim 7, wherein:
the first mold has a first opposing surface that faces the second mold, wherein the first opposing surface has a first molding hole used to form a portion of the one or more protrusions, and
the second mold has a second opposing surface that faces the first mold, wherein the second opposing surface has a second molding hole used to form a remaining portion of the one or more protrusions.

9. An injection mold used for manufacture of an arc-shaped resin molded object with a first end part and a second end part, the resin molded object having a first surface and a second surface opposite each other along an axis, and an inner circumferential surface and an outer circumferential surface between the first surface and the second surface, the injection mold comprising:
an inner mold that has an inner circumference molding surface forming the inner circumferential surface; and
an outer mold that has an outer circumference molding surface forming the outer circumferential surface, wherein:
a circumferential molding groove is formed on an inner circumferential surface of the outer mold,
the molding groove has:
a first side surface that forms a first outer region of the first surface, the outer circumference molding surface serving as a bottom surface; and
a second side surface that forms a second outer region of the second surface, and
the inner mold includes:
a first molding surface that forms a first inner region of the first surface inside the first outer region; and
a second molding surface that forms a second inner region of the second surface inside the second outer region.

10. The injection mold according to claim 9, further including an opposing surface that faces the outer circumferential surface,
wherein the opposing surface has no parting line corresponding to a boundary between the inner mold and the outer mold throughout an entire range including a circumferential edge of the opposing surface.

11. An arc-shaped resin molded object comprising:
a first surface and a second surface opposing each other along an axis;
an inner circumferential surface and an outer circumferential surface between the first surface and the second surface;
a first end part;
a second end part;
a straight first protrusion formed circumferentially between a first outer region and a first inner region of the first surface,
wherein the first outer region includes an outer circumferential edge of the first surface, and
wherein the first inner region is located inside the first outer region and includes an inner circumferential edge of the first surface; and
a straight second protrusion formed circumferentially between a second outer region and a second inner region of the second surface,
wherein the second outer region includes an outer circumferential edge of the second surface, and
wherein the second inner region is located inside the second outer region and includes an inner circumferential edge of the second surface.

12. The resin molded object according to claim 11,
wherein the opposing surface has no linear flash, corresponding to a parting line of an injection mold, on the outer circumferential surface throughout an entire range including a circumferential edge of the outer circumferential surface.
